# EUROPEAN PATENT SPECIFICATION

(11) **EP 0 539 665 B1**
(45) Date of publication and mention of the grant of the patent: **08.10.1997**
(21) Application number: 92112936.7
(22) Date of filing: 29.07.1992
(51) Int. Cl.: G11B 15/665

(54) **Tape loading apparatus**
Bandladegerät
Appareil de chargement de bande

(30) Priority: 26.09.1991 KR 1681891
(43) Date of publication of application: 05.05.1993
(73) Proprietor: SAMSUNG ELECTRONICS CO. LTD., Suwon, Kyungki-do (KR)
(72) Inventor: Lee, Pil-hong, Suwon, Kyungki-do (KR)
(74) Representative: Grünecker, Kinkeldey, Stockmair & Schwanhäusser Anwaltssozietät

(56) References cited:
- EP-A- 0 404 426
- DE-A- 3 727 230
- PATENT ABSTRACTS OF JAPAN vol. 10, no. 52 (P-432)28 February 1986;& JP-A-60195762
- PATENT ABSTRACTS OF JAPAN vol. 15, no. 420 (P-1267)24 October 1991;& JP-A-3171462
- PATENT ABSTRACTS OF JAPAN vol. 4, no. 47 (P-6)(529) 11 April 1980;& JP-A-5517807
- PATENT ABSTRACTS OF JAPAN vol. 9, no. 40 (P-336)(1763) 20 February 1985;& JP-A-59180850
- PATENT ABSTRACTS OF JAPAN vol. 9, no. 40 (P-336)20 February 1985;& JP-A-59180851

## Description

The present invention relates to a tape loading apparatus in which the tape in the cassette is pulled out so that the tape is wound on a head drum for use in a tape recorder having a deck mechanism provided on a rotary type head drum. More particularly, the present invention relates to a tape loading apparatus having both a half-loading function and a full-loading function for the deck mechanism corresponding to a video index search system (VISS).

Generally, a magnetic recording and/or reproducing apparatus having a rotary type head drum as in a video tape recorder or a digital audio tape recorder, is provided with a tape loading mechanism having a moving guider for guiding a tape run in which the tape is pulled out from the cassette loaded into the deck, and then makes close contact with the head drum at a predetermined slope. Also, the deck mechanism corresponding to the VISS is provided with a half-loading mechanism in which the tape makes only slight contact with the control head, thereby enabling the tape to run at a high speed.

One example of such a VISS corresponding deck mechanism is disclosed in the Japanese laid-open utility model publication No. Hei 2-84143. Therein, a full loading apparatus for loading the tape on the rotary head drum and a half loading apparatus for loading the tape on a control head, are separately fabricated and installed. Accordingly, the deck mechanism becomes complicated, thereby increasing cost as well making its design and assembly difficult. Also, since this leads to increased assembly errors, poor quality or malfunctioning products are frequently detected. Accordingly, product reliability is lowered.

JP-A- 60 195 762 discloses a tape loading apparatus as defined in the first part of claim 1.

### Summary of the Invention

Therefore, it is an object of the present invention to provide a tape loading apparatus for use in a video tape recorder carrying out the above-mentioned full-loading and half-loading functions with a single mechanism by improving an existing loading mechanism with which a tape is in close contact with a head drum.

According to first aspect to accomplish the object of the present invention, there is provided a tape loading apparatus as defined in claim 1.

According to second aspect to accomplish the object of the present invention, there is provided a tape loading apparatus as defined in claim 5.

According to the above first aspect of the present invention, the tape movement guide is moved stepwise to a half-loading and a full-loading location by means of the difference of diameters between the driving gear member and the driven gear member, and an idly rotating portion provided on both the driving and driven gear members when the driving gear member is rotated in a loading direction. Thus, a separate half-loading mechanism is not requred.

Also, according to the above second aspect of the present invention, the tape guide is moved selectively and stepwise to the half-loaded and fully loaded locations by means of the movement of the gear member having a gear portion which engages selectively and stepwise with the driving gear member, the driven gear member and the half-loading gear which are the same shape and size. Thus, a separate half-loading mechanism is not needed in the present invention.

### Brief Description of the Drawings

The above objects and other advantages of the present invention will become more apparent by describing in detail a preferred embodiment of the present invention with reference to the attached drawings in which:
FIG.1A is a plan view showing the unloaded state of a tape loading apparatus according to the first aspect of the present invention;
FIG.1B is a plan view showing the half-loaded state of a tape loading apparatus according to the first aspect of the present invention;
FIG.1C is a plan view showing the full-loaded state of a tape loading apparatus according to the first aspect of the present invention;
FIG.2 is a prospective view of essential elements extracted from the apparatus shown in FIGs.1A to 1C;
FIG.3A is a plan view showing the unloaded state of a tape loading apparatus according to the second aspect of the present invention;
FIG.3B is a plan view showing the half-loaded state of a tape loading apparatus according to the second aspect of the present invention;
FIG.3C is a plan view showing an intermediate state of a tape loading apparatus according to the second aspect of the present invention;
FIG.3D is a plan view showing the full-loaded state of a tape loading apparatus according to the second aspect of the present invention;
FIG.4 is a perspective view of essential elements extracted from in the apparatus shown in FIgs.3A to 3D; and
FIG.5 is a perspective view of the gear driving member shown in FIGs.3A-3D.

### Detailed Description of the Invention

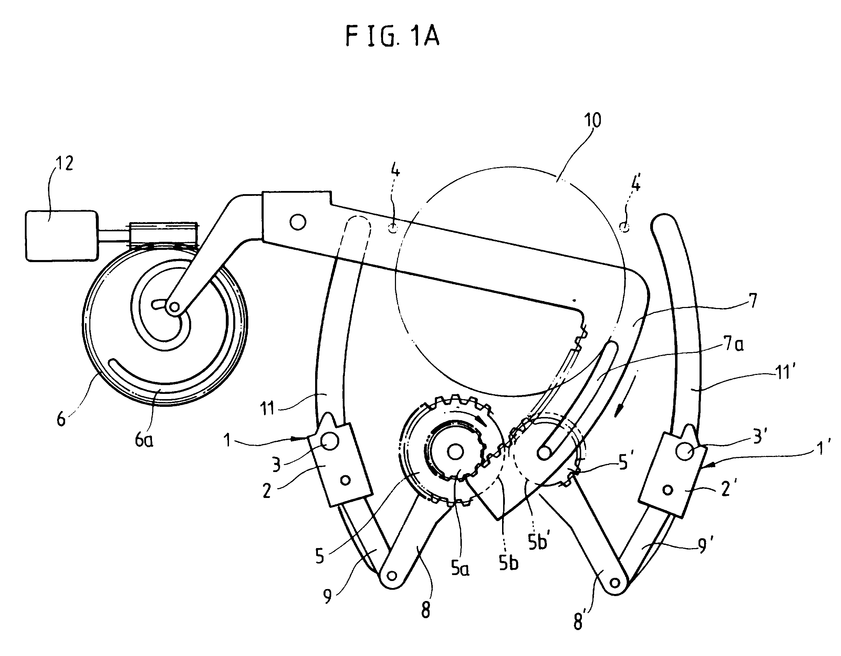

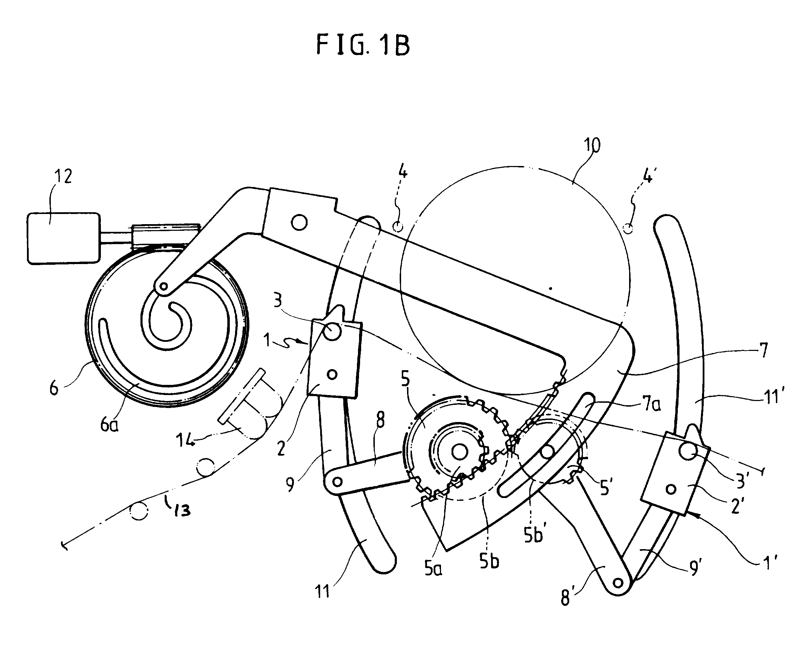

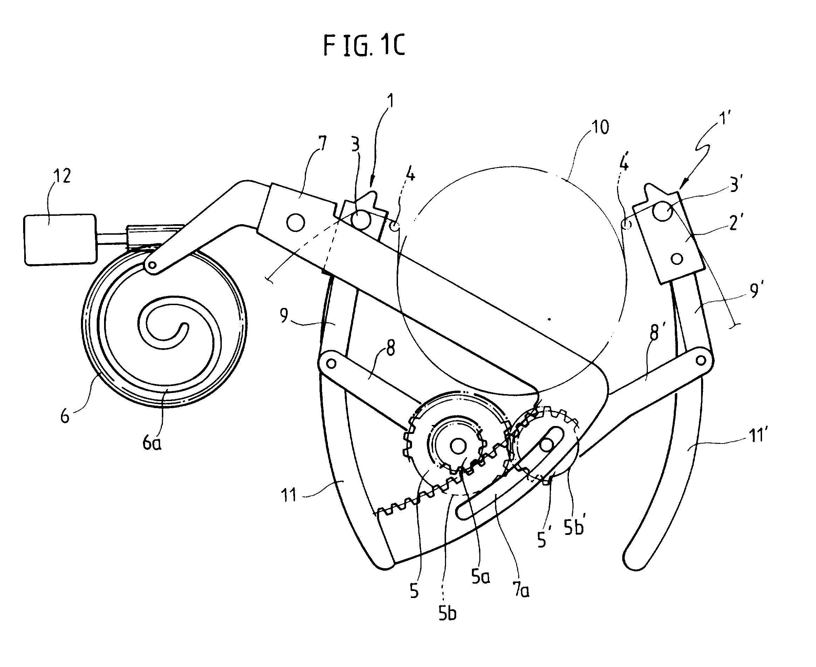

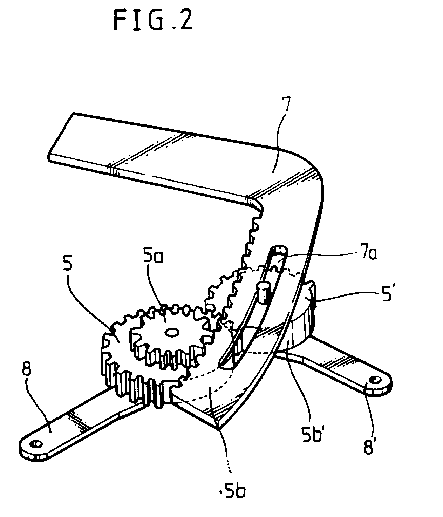

FIGs.1A, 1B, 1C and 2 show a tape loading apparatus according to one embodiment of the first aspect of the present invention. FIGs.1A, 1B, and 1C show the unloaded, half-loaded and fully loaded states, respectively, while FIG.2 is a perspective view of two gear members and a driving pinion extracted from FIG.1.

Referring to FIGs.1A, 1B, 1C and 2, tape movement guides 1 and 1' comprise pole bases 2 and 2', guide rollers 3 and 3' provided on the upper surfaces of the pole bases 2 and 2'. Accordingly, moving tape guiders are movably installed along guide grooves 11 and 11' provided on either side of head drum 10.

Slant poles 4 and 4' are fixedly installed adjacent to head drum 10. Also, in front of head drum 10, take-up loading gear 5 as the driving gear member and supply loading gear 5' as the driven gear member, are installed so as to rotatably engage each other. On the upper portion of take-up loading gear 5 is integrally formed driving pinion 5a. Sector gear 7 substantially L-shaped and rotatably moved along curved cam groove 6a of cam gear 6 driven by a conventional motor 12 is engaged with driving pinion 5a. The sector gear 7 is provided with elongated guide slot 7a into which the central axis of supply loading gear 5' is inserted and along which the supply loading gear 5' is moved.

The diameter of the take-up loading gear 5 is larger than that of supply loading gear 5'. These take-up and supply loading gears are provided with idly rotating portions 5b and 5b' which are idly rotated within a predetermined angle. The take-up loading gear is connected with one pole base 2 by means of one arm 8 and link 9. On the other hand, the supply loading gear 5' is connected with the other pole base 2' by means of the other arm 8' and link 9'.

The difference between the diameters of take-up loading gear 5 and supply loading gear 5' is adjusted at a predetermined rate. In doing so, since driving pinion 5a of take-up loading gear 5 is driven by sector gear 7 when loading gears 5 and 5' are idly rotated by the idly rotating portions 5b and 5b', tape guide 1 which is connected with take-up loading gear 5 pre-loaded by a predetermined distance and tape guide 1' which is connected with supply loading gear 5', can be moved simultaneously at the fully loaded location when the loading gears 5 and 5' are engaged.

The tape loading apparatus having the above-mentioned construction according to the first aspect of the present invention operates as follows.

In the unloaded state as shown in FIG.1A, sector gear 7 is rotated in a direction of the arrow along curved cam grove 6a of cam gear 6 which is rotated by the drive of motor 12. Then, sector gear 7 is stably rotated by means of elongated guide slot 7a formed thereon and the axis of supply loading gear 5' inserted into elongated slot 7a. When sector gear 7 is rotated, and accordingly, driving pinion 5a engaged with sector gear 7 is rotated, take-up loading gear 5 in which driving pinion 5a is integrally formed is rotated clockwise by a predetermined angle. In this case, since supply loading gear 5' is not rotated due to idly rotating portions 5b and 5b' provided thereon, only take-up tape movement guide 1 is moved to the half-loaded location as shown in FIG.1B. Thus, tape 13 passes by guide roller 3 of tape movement guide 1 and then makes contact with the existing audio/control head 14, thereby enabling high speed search operation via the VISS function.

Next, when sector gear 7 is further rotated clockwise to thereby rotate driving pinion 5a, take-up loading gear 5 which is integrally formed with driving pinion 5a is rotated clockwise, with the result of take-up loading gear 5 engaging with supply loading gear 5'. Then, these loading gears 5 and 5' are simultaneously rotated. At this time, since the diameter of take-up loading gear 5 is larger than that of supply loading gear 5', the number of revolutions of supply loading gear 5' is larger than that of take-up loading gear 5, due to the difference of their diameters. Thus, since the movement of supply tape movement guide 1' is faster than that of take-up tape movement guide 1 which has been present to the half-loaded location, these loading gears 5 and 5' are finally simultaneously moved to the full-loaded location as shown in FIG.1C. On the other hand, the unloading operation is reversely advanced with respect to the above-described loading operation.

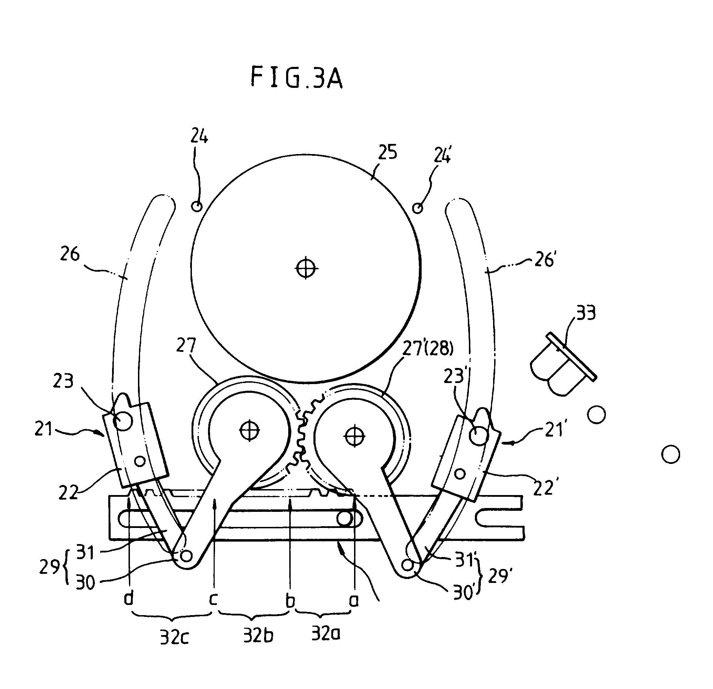

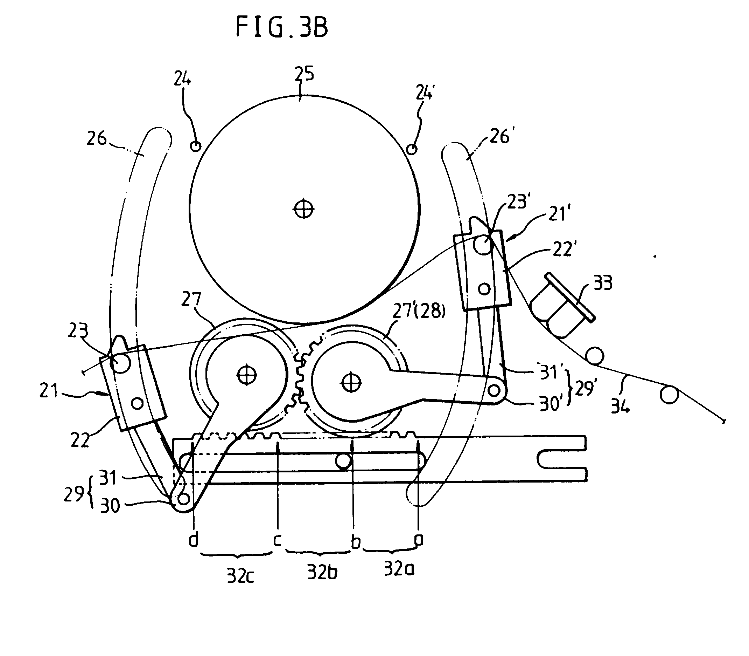

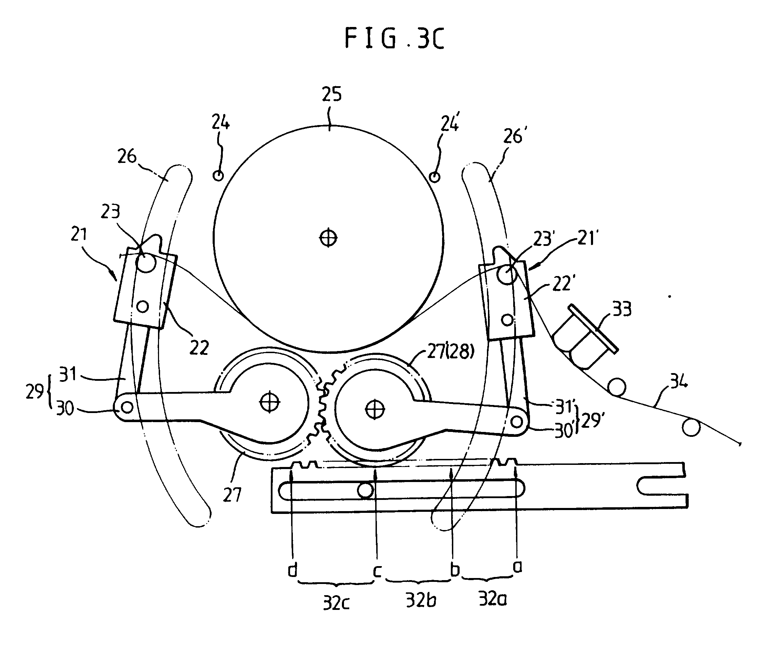

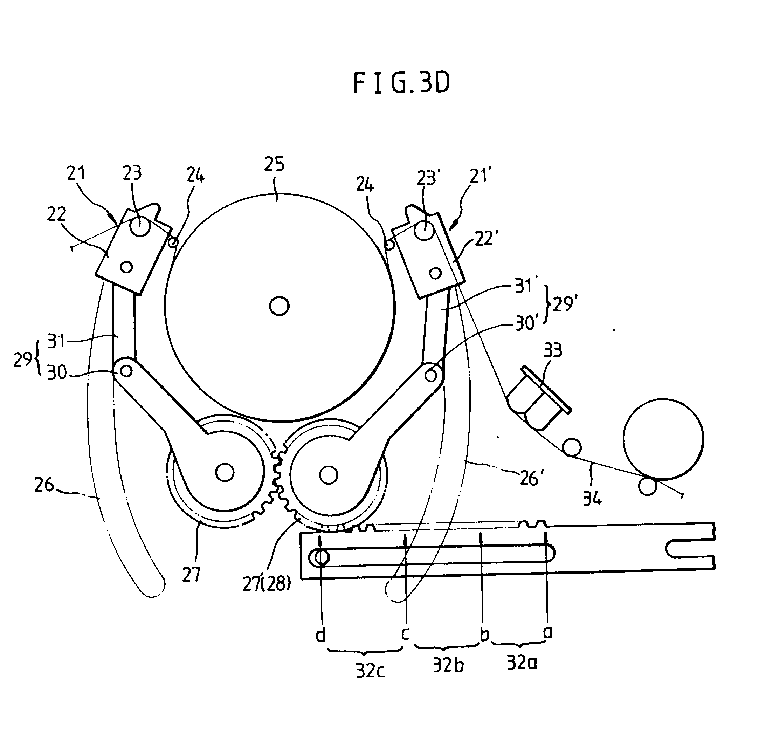

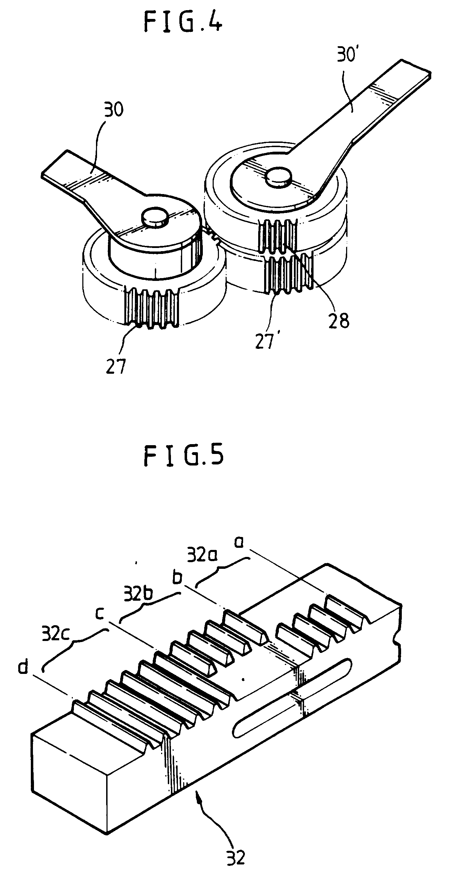

FIGs.3A-3D, 4 and 5 show another embodiment of the second aspect of the present invention. FIGs.3A-3D show the unloaded, half-loaded, an intermediate and fully loaded states, respectively, while FIG.4 is a perspective view showing two gear members and the half-loading gear extracted from FIG.3. FIG.5 is a perspective view showing the gear driving member extracted from FIG.3.

Referring to FIGs.3A-3D, 4 and 5, a pair of tape movement guides 21 and 21' comprise pole bases 22 and 22', guide rollers 23 and 23' provided on the upper surfaces of the pole bases 22 and 22'. Accordingly, tape movement guides are movably installed along guide grooves 26 and 26' provided on either side of head drum 25. Also, slant poles 24 and 24' are fixedly installed adjacent to head drum 25.

Also, take-up loading gear 27' as the driving gear member and supply loading gear 27' as the driven gear member, are disposed in front of head drum 25. These loading gears have the same shape and size as shown in FIG.4. Here, take-up loading gear 27' and supply loading gear 27 are engaged with each other, and half-loading gear 28 is coaxially and idly rotatably installed on the upper portion of take-up loading gear 27'.

Connection members 29 and 29' comprise arms 30 and 30' and links 31 and 31', respectively, to thereby be hinged. Arm 30 and link 31 of one connection member 29 are connected with the above supply loading gear 27 and pole base 22, respectively. On the other hand, the other arm 30' and link 31' of the other one connection member 29' are connected with the above take-up half-loading gear 28 and pole base 22', respectively.

Also, gear driving member 32 is disposed to allow for of rectilinear motion, so as to rotate (by an unshown driving source) take-up loading gear 27' and half-loading gear 28 which are disposed on the same vertical axis. As shown in FIG.5, gear driving member 32 comprises a first gear portion 32a which is formed on the upper half portion of interval a-b and with which only half-loading gear 28 engages, a second gear portion 32b which is formed on the lower half portion of interval b-c and with which only take-up loading gear engages and a third gear portion 32c which is formed on the whole portion of interval c-d and with which two loading gears 27 and 28 engage simultaneously.

The tape loading apparatus having the above-mentioned construction according to the second aspect of the present invention operates as follows.

In the unloaded state as shown in FIG.3A, gear driving member 32 is moved to the right side, at first half-loading gear 28 is rotatably engaged with first gear portion 32a of gear driving member 32. At this time, since take-up loading gear 27' and supply loading gear 27 are not rotated, only take-up tape movement guide 21' is moved to the half-loaded location as shown in FIG.3B. Thus, tape 34 passes by guide roller 23' of tape movement guide 21' and then makes contact with the existing audio/control head 33, thereby enabling high speed search operation via the VISS function.

Next, take-up loading gear 27' is rotatably engaged with second gear portion 32b of gear driving member 32, and at the same time, supply loading gear 27 is rotated. At this time, since half loading gear 28 stops, supply moving tape guider 21 is also moved to the half-loaded location as shown in FIG.3C. Thereafter, loading gears 27 and 27' and half loading gear 28 are all rotated by means of third gear portion 32c of gear driving member 32, to thereby be in the full-loaded state as shown in FIG.3B.

Conclusively, moving tape guiders 21 and 21' are loaded stepwise and selectively. By controlling the moving interval of gear driving member 32, it is possible to half-load and fully load the tape. On the other hand, the unloading operation of the tape is reversely performed by the reverse movement of gear driving member 32.

As described above, the tape loading apparatus according to the present invention does not use the separate half-loading mechanism, and instead improves the part of the existing tape loading mechanism, to thereby provide the tape loading apparatus having both the full-loading and half-loading functions. Accordingly, the present invention can reduce cost, while simplifying design and assembly, as well as lessen the occurance malfunction of the VISS mechanism, thereby improving product reliability.

While the invention has been particularly shown and described with reference to preferred embodiments thereof, it will be understood by those skilled in the art that various changes in form and details may be made therein without departing from the scope of the invention as defined by the appended claims.

## Claims

1. A tape loading apparatus comprising two rotatable gear members (5, 5') respectively connected with two tape movement guides (1, 1'), whereby the driving gear member (5) has a greater diameter than the driven gear member (5') and is rotated in a loading direction by a predetermined angle to move the corresponding tape movement guide (1) in a half-loaded location before engagement with the driven gear member (5') for simultaneous rotation of the tape movement guides (1, 1') toward fully-loaded location, **characterized in that** both gear members (5, 5') have tooth-free portions (5b, 5b') for idle rotation of the driven gear member (5') until the driving gear member (5) is rotated by said predetermined angle.

2. The tape loading apparatus according to claim 1, **characterized in that** said driving gear member (5) is integrally formed with a driving pinion (5a) which is driven by sector gear (7).

3. The tape loading apparatus according to claim 2, **characterized in that** said sector gear (7) is of substantially L-shape with one end rotatably moved along a curved cam groove (6a) of a cam gear (6) which is driven by a motor (12).

4. The tape loading apparatus according to claims 2 or 3, **characterized in that** said sector gear (7) is provided with an elongated guide slot (7a) in which an axis of the driven member (5') is inserted and along which said driven member (5') is moved.

5. A tape loading apparatus comprising two gear members (27, 27') which rotatably engage and are respectively connected with two tape movement guides (21, 21'), **characterized by** a half-loading gear (28) which is rotatably installed on an axis of said driving gear member (27') of said two gear members, whereby the driving gear member (27') is freely rotatable with respect to the half-loading gear (28);
connection members (26, 26') in which the two tape movement guides (21, 21') are moved within a predetermined interval, respectively, by means of said driven gear member (27) and the half-loading gear (28); and
a gear driving member (32) with a number of gear portions (32a-c) whereby a first gear portion (32a) is engageable only with said half-loading gear (28), a second gear portion (32b) is engageable only with said driving gear member (27') and a third gear portion (32c) is commonly engageable with both said half-loading gear (28) and said driving gear member (27'), which gear portions (32a-c) have a predetermined length for selectively driving the gear members (27, 27') and said half-loading gear (28) by means of a driving source, whereby a tape (34) is loaded step-wise by means of said tape movement guides (21, 21').

6. The tape loading apparatus according to claim 5, **characterized in that** said gear driving member (32) is a toothed rack for rectilinear motion.

## Patentansprüche

1. Bandladegerät mit zwei drehbaren Zahnradelementen (5,5'), die entsprechend mit zwei Bandbewegungsführungen (1,1') verbunden sind, wobei das antreibende Zahnradelement (5) einen größeren Durchmesser als das angetriebene Zahnradelement (5') aufweist und in eine Laderichtung um einen vorbestimmten Winkel drehbar ist, um die entsprechende Bandbewegungsführung (1) in einer Halbladestellung vor Eingriff mit dem angetriebenen Zahnradelement (5') zur gleichzeitigen Drehung der Bandbewegungsführung (1,1') zur Volladestellung zu bewegen, **dadurch gekennzeichnet, daß** beide Zahnradelemente (5,5') zahnfreie Bereiche (5b,5b') zur freien Drehung des angetriebenen Zahnradelements (5') bis zur Drehung des antreibenden Zahnradelements (5) um den vorbestimmten Winkel aufweisen.

2. Bandladegerät nach Anspruch 1, **dadurch gekennzeichnet, daß** das antreibende Zahnradelement (5) einteilig mit einem Antriebsritzel (5a) ausgebildet ist, welches durch einen Sektorzahnbauteil (7) angetrieben ist.

3. Bandladegerät nach Anspruch 2, **dadurch gekennzeichnet, daß** das Sektorzahnbauteil (7) im wesentlichen L-förmig ist, wobei ein Ende drehbar entlang einer gekrümmten Nockennut 6a einer Nockenscheibe (6) bewegbar ist, die durch einen Motor (5) angetrieben ist.

4. Bandladegerät nach Ansprüchen 2 oder 3, **dadurch gekennzeichnet, daß** das Sektorzahnbauteil (7) mit einem langgestreckten Führungsschlitz (7a) ausgebildet ist, in dem eine Achse des angetriebenen Elements (5') eingesetzt ist und entlang welchem das angetriebene Element (5') bewegbar ist.

5. Bandladegerät mit zwei Zahnradelementen (27, 27'), die in drehbarem Eingriff sind und entsprechend mit zwei Bandbewegungsführungen (21, 21') verbunden sind, gekennzeichnet durch ein Halbladezahnradelement (28), welches drehbar auf einer Achse des antreibenden Zahnradelements (27') der beiden Zahnradelemente montiert ist, wobei das antreibende Zahnradelement (27') frei drehbar bezüglich des Halbladezahnradelements (28) ist;
Verbindungselemente (26, 26'), in denen die beiden Bandbewegungsführungen (21, 21') innerhalb eines vorbestimmten Intervalls entsprechend mittels des angetriebenen Zahnradelements (27) und das Halbladezahnradelement (28) bewegbar sind, und
ein Zahnantriebsteil (32) mit einer Anzahl von Zahnbereichen (32a - c), wobei ein erster Zahnbereich (32a) nur mit dem Halbladezahnradelement (28) in Eingriff bringbar ist, ein zweiter Zahnbereich (32b) nur mit dem Antriebszahnradelement (27') in Eingriff bringbar ist, und ein dritter Zahnbereich (32c) gemeinsam mit Halbladezahnradelement (38) und dem Antriebszahnradelement (37') in Eingriff bringbar ist, welche Zahnbereiche (32a - c) eine vorbestimmte Länge zum selektiven Antreiben der Zahnradelemente (27, 27') und des Halbladezahnradelements (28) mittels einer Antriebsquelle aufweisen, wobei ein Band (34) schrittweise mittels der Bandbewegungsführungen (21, 21') ladbar ist.

6. Bandladegerät nach Anspruch 5, **dadurch gekennzeichnet, daß** das Zahnradantriebsbauteil (32) eine Zahnstange zur gradlinigen Bewegung ist.

## Revendications

1. Dispositif de chargement de bande comprenant deux éléments d'engrenage tournants (5, 5') respectivement connectés à deux guides de déplacement de bande (1, 1'), dans lequel l'élément d'engrenage d'entraînement (5) possède un diamètre supérieur à celui de l'élément d'engrenage entraîné (5') et tourne dans un sens de chargement d'un angle prédéterminé afin de déplacer le guide de déplacement de bande correspondant (1) dans une position semi-chargée avant l'engrènement avec l'élément d'engrenage entraîné (5') pour faire tourner simultanément les guides de déplacement de bande (1, 1') en direction de la position complètement chargée, caractérisé en ce que les deux éléments d'engrenage (5, 5') comportent des parties sans dent (5b, 5b') permettant la rotation libre de l'élément d'engrenage entraîné (5') jusqu'à ce que l'élément d'engrenage d'entraînement (5) tourne dudit angle prédéterminé.

2. Dispositif de chargement de bande selon la revendication 1, caractérisé en ce que ledit élément d'engrenage d'entraînement (5) est formé d'un seul tenant avec un pignon d'entraînement (5a) qui est entraîné par un secteur denté (7).

3. Dispositif de chargement de bande selon la revendication 2, caractérisé en ce que ledit secteur denté (7) présente une forme sensiblement en L, ayant une extrémité déplacée en rotation le long d'une gorge de came incurvée (6a) d'une roue dentée à came (6) qui est entraînée par un moteur (12).

4. Dispositif de chargement de bande selon la revendication 2 ou 3, caractérisé en ce que ledit secteur denté (7) comporte une rainure de guidage allongée (7a) dans laquelle est inséré un axe de l'élément entraîné (5') et le long de laquelle est déplacé ledit élément entraîné (5').

5. Dispositif de chargement de bande comprenant deux éléments d'engrenage (27, 27') qui s'engrènent en rotation et qui sont respectivement connectés à deux guides de déplacement de bande (21, 21'), caractérisé par une roue dentée de demi-chargement (28) montée en rotation sur un axe dudit élément d'engrenage d'entraînement (27') desdits deux éléments d'engrenage, dans lequel l'élément d'engrenage d'entraînement (27') peut librement tourner par rapport à la roue dentée de demi-chargement (28) ;
des éléments de connexion (26, 26') dans lesquels sont déplacés les deux guides de déplacement de bande (21, 21') dans les limites d'un intervalle prédéterminé, respectivement, sous l'action dudit élément d'engrenage entraîné (27) et de la roue dentée de demi-chargement (28) ; et
un élément d'entraînement d'engrenage (32) comportant un certain nombre de parties dentées (32a-c) et dans lequel une première partie dentée (32a) ne peut engrener qu'avec ladite roue dentée de demi-chargement (28), une seconde partie dentée (32b) ne peut engrener qu'avec ledit élément d'engrenage d'entraînement (27') et une troisième partie dentée (32c) peut engrener, à la fois, avec ladite dentée de demi-chargement (28) et ledit élément d'engrenage d'entraînement (27'), lesquelles parties dentées (32a-c) ont une longueur prédéterminée permettant d'entraîner sélectivement les éléments d'engrenage (27, 27') et ladite roue dentée de demi-chargement (28) au moyen d'une source d'entraînement, dans lequel une bande (34) est chargée par pas grâce auxdits guides de déplacement de bande (21, 21').

6. Dispositif de chargement de bande selon la revendication 5, caractérisé en ce que ledit élément d'entraînement d'engrenage (32) est une crémaillère permettant un déplacement rectiligne.
